# EUROPÄISCHE PATENTSCHRIFT

(11) **EP 0 809 073 B1**
(45) Veröffentlichungstag und Bekanntmachung des Hinweises auf die Patenterteilung: **19.12.2001**
(21) Anmeldenummer: 97107877.9
(22) Anmeldetag: 14.05.1997
(51) Int. Cl.: F23L 11/00, F16K 11/052

(54) **Antriebswelleneinheit**
Drive shaft assembly
Assemblage d'un arbre de transmission

(30) Priorität: 23.05.1996 DE 19620823
(43) Veröffentlichungstag der Anmeldung: 26.11.1997
(73) Patentinhaber: SIEMENS AKTIENGESELLSCHAFT, 80333 München (DE)
(72) Erfinder: Bähr, Siegfried, 91330 Eggolsheim (DE); Lorenz, Dirk, Dipl.-Ing., 91058 Erlangen (DE)

(56) Entgegenhaltungen:
- DE-A- 3 637 734
- DE-B- 1 049 524
- DE-C- 834 168
- PATENT ABSTRACTS OF JAPAN vol. 008, no. 244 (M-337), 9. November 1984 & JP 59 121217 A (CANON KK), 13. Juli 1984

## Beschreibung

Die Erfindung bezieht sich auf einer Antriebswelleneinheit für eine Rauchgasklappe im Rauchgaskanal einer Gasturbine.

Bei einer Gas- und Dampfturbinenanlage strömt heißes Rauchgas aus der Gasturbine durch einen Abhitzedampferzeuger, in dem Dampf für die Dampfturbine erzeugt wird. Bedarfsweise kann die Gasturbine auch allein betrieben werden, wobei dann das heiße Rauchgas über einen Bypasskamin in die Atmosphäre abgeführt wird. Für eine Umschaltung zwischen diesen beiden Betriebsweisen der Gas- und Dampfturbinenanlage ist im Rauchgaskanal der Gasturbine üblicherweise eine Rauchgasklappe angeordnet. Diese Rauchgasklappe dient zum Verschließen oder Öffnen des Querschnitts eines Rauchgaseintrittskanals in den Abhitzedampferzeuger bei gleichzeitigem Öffnen bzw. Schließen des Querschnitts des Bypasskamins. Eine derartige Rauchgasklappe ist beispielsweise aus der DE-AS 10 49 524 oder aus der Zeitschrift BWK, Band 36 (1984), Nr. 10, Seiten 409f., bekannt.

Eine derartige Rauchgasklappe wird üblicherweise über eine Hebelanordnung angetrieben, die ihrerseits über eine im Rauchgaskanal angeordnete, an einen außerhalb des Rauchgaskanals angeordneten Stellmotor angeschlossene Antriebswelleneinheit betätigt wird.

Der Rauchgaskanal der Gasturbine sowie alle in ihm angeordneten Komponenten müssen für erhebliche thermische Belastungen ausgelegt sein. Erhebliche thermische Belastungen treten beispielsweise dann auf, wenn innerhalb kurzer Zeit vom kombiniertem Gas- und Dampfturbinen- auf reinen Gasturbinenbetrieb umgeschaltet wird und das etwa 500 bis 600°C heiße Rauchgas über den Bypasskamin abgeführt werden muß. Da die Antriebswelleneinheit für die Kraftübertragung vom Stellmotor auf die Rauchgasklappe vorgesehen ist, treten an ihr zudem hohe mechanische Belastungen auf. Daher sind an die Auslegung der Antriebswelleneinheit besonders hohe Anforderungen zu stellen.

Um die mechanischen Belastungen der Antriebswelleneinheit besonders gering zu halten und somit einer Überbeanspruchung von deren Bestandteilen entgegenzuwirken, können zwei Stellmotoren vorgesehen sein, von denen jeder an jeweils einem Ende der Antriebswelleneinheit angeordnet ist. Daraus resultiert beim Betätigen der Rauchgasklappe eine symmetrische Kräfteverteilung innerhalb der Antriebswelleneinheit, so daß ihre Beanspruchung besonders gering ist. Es kann jedoch, beispielsweise aus baulichen oder Kostengründen, erforderlich sein, die Antriebswelleneinheit lediglich über einen Stellmotor zu betätigen. In diesem Fall oder auch im Falle sich ändernder Betriebslasten tritt eine stark asymmetrische Kräfteverteilung beim Betätigen der Antriebswelleneinheit auf, so daß deren Lebensdauer nur begrenzt ist.

Der Erfindung liegt daher die Aufgabe zugrunde, eine Antriebswelleneinheit für eine Rauchgasklappe im Rauchgaskanal einer Gasturbine anzugeben, die für besonders hohe mechanische und thermische Belastungen ausgelegt ist und somit auch in Kombination mit nur einem Stellmotor eine besonders lange Lebensdauer aufweist.

Diese Aufgabe wird erfindungsgemäß gelöst, indem die Antriebswelleneinheit ein eine Antriebswelle umschließendes Gehäuse aufweist, das Aussparungen zur Aufnahme von am Wellenumfang verteilter Führungsfinnen aufweist, wobei ein erster Satz von Führungsfinnen mit dem Gehäuse fest verbunden ist, und wobei ein zweiter Satz von Führungsfinnen in den diesen zugeordneten Aussparungen in Längsrichtung der Antriebswelle verschiebbar ist.

Die Erfindung geht dabei von der Überlegung aus, daß eine sowohl gegen mechanische als auch gegen thermische Spannungen besonders widerstandsfähige Antriebswelleneinheit einerseits eine besonders geringe thermische Trägheit und andererseits eine besonders hohe Torsionsfestigkeit aufweisen sollte. Eine Verringerung der thermischen Trägheit ist durch eine Verringerung der Masse der Antriebswelleneinheit erreichbar. Um trotz verringerter Masse eine hohe Torsionsfestigkeit sicherzustellen, kann die Antriebswelle von einem mit ihr in Drehrichtung kraftschlüssig verbundenen Gehäuse umgeben sein.

Durch den ersten, mit dem Gehäuse fest verbundenen Satz von Führungsfinnen ist das Gehäuse relativ zur Antriebswelle fixiert. Da bei einer Aufheizung oder Abkühlung der Antriebswelleneinheit das Gehäuse früher als die Antriebswelle aufgeheizt bzw. abgekühlt wird, entstehen jedoch zwischen Gehäuse und Antriebswelle thermische Spannungen aufgrund von thermischen Ausdehnungsvorgängen. Dies ist kompensierbar durch die verschiebbare Anordnung des zweiten Satzes von Führungsfinnen in den diesen zugeordneten Aussparungen.

Um eine besonders einfache Montage der Antriebswelleneinheit zu gewährleisten, ist das Gehäuse zweckmäßigerweise aus zwei U-Profilstücken zusammengesetzt.

Die mit der Erfindung erzielten Vorteile bestehen insbesondere darin, daß die Antriebswelleneinheit bei hoher Torsionsfestigkeit eine besonders geringe Masse aufweist. Somit ist sie sowohl thermisch als auch mechanisch besonders stabil. Zudem ist aufgrund einer einfach montierbaren Bauweise eine bereits vorhandene Antriebswelle im Rauchgaskanal einer Gasturbine mit besonders einfachen Mitteln in eine derartige Antriebswelleneinheit umrüstbar.

Ein Ausführungsbeispiel der Erfindung wird anhand einer Zeichnung näher erläutert. Darin zeigen:
- Figur 1: schematisch in einer Seitenansicht einen Ausschnitt aus einem Rauchgaskanal einer Gasturbine, und
- Figur 2: eine Antriebswelleneinheit.

Einander entsprechende Teile sind in beiden Figuren mit den gleichen Bezugszeichen versehen.

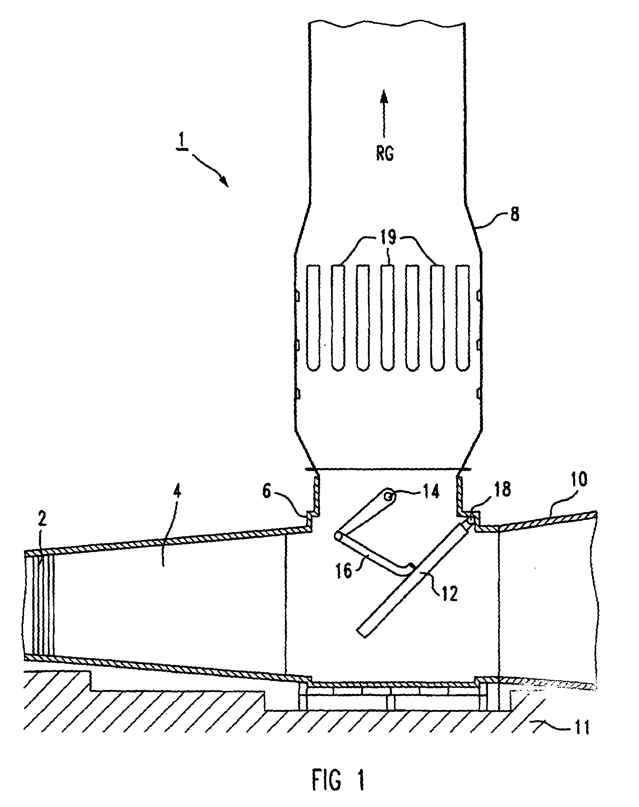

Der Rauchgaskanal 1 der (nicht dargestellten) Gasturbine gemäß Figur 1 umfaßt als Komponenten oder Kanalstücke einen Metallkompensator 2, der über einen Diffusor 4 an eine Umlenkeinrichtung 6 angeschlossen ist. Die Umlenkeinrichtung 6 ist ausgangsseitig mit einem Bypasskamin 8 und mit einem Stutzen 10 zur Rauchgaszuführung zu einem nicht näher dargestellten Abhitzekessel verbunden. Der Metallkompensator 2, der Diffusor 4, die Umlenkeinrichtung 6 und der Stutzen 10 sind auf einem gemeinsamen Fundament 11 angeordnet.

Innerhalb der Umlenkeinrichtung 6 ist eine Rauchgasklappe 12 angeordnet. Die Rauchgasklappe 12 ist mittels einer über eine Antriebswelleneinheit 14 antreibbaren Hebelanordnung 16 um eine Schwenkachse 18 schwenkbar. Die Antriebswelleneinheit 14 ist durch die Seitenwand der Umlenkeinrichtung 6 geführt und mit einem außerhalb der Umlenkeinheit 6 angeordneten Stellmotor in nicht näher dargestellter Weise verbunden.

Mittels der Rauchgasklappe 12 ist der Betriebszustand des Rauchgaskanals 1 an den Betriebszustand der Gas- und Dampfturbinenanlage anpaßbar. Bei alleinigem Betrieb der Gasturbine wird mittels der Rauchgasklappe 12 der Stutzen 10 verschlossen, wobei das Rauchgas RG aus der Gasturbine über den Bypasskamin 8 geführt wird. Zur Schalldämpfung in diesem Betriebszustand ist im Bypasskamin 8 eine Anzahl von Schalldämpferkulissen 19 angeordnet. Beim kombinierten Betrieb von Gasturbine und Dampfturbine wird mittels der Rauchgasklappe 12 das Rauchgas RG am Bypasskamin 8 vorbei in den Stutzen 10 und somit in den Abhitzekessel geleitet.

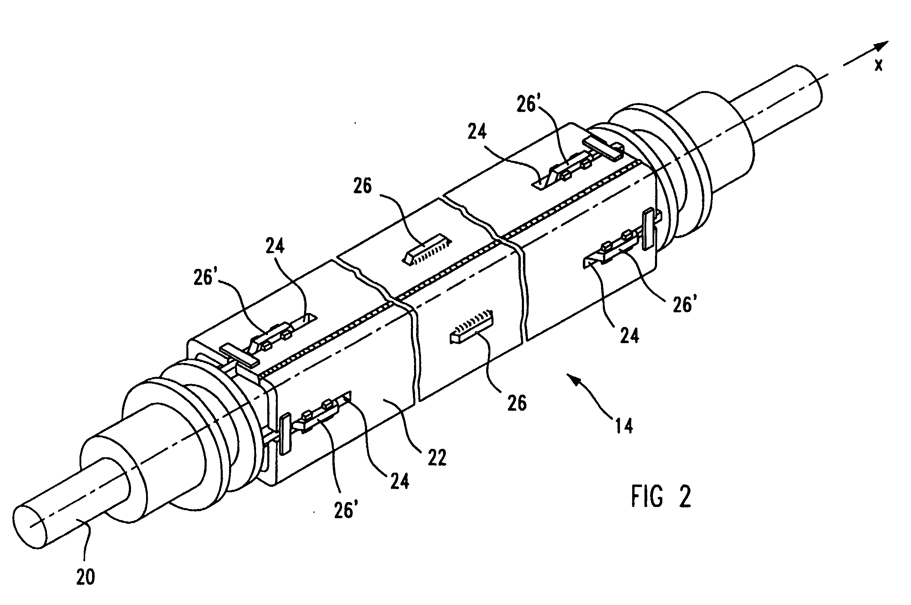

Die Antriebswelleneinheit 14 umfaßt, wie in Figur 2 dargestellt, eine Antriebswelle 20, die von einem aus zwei U-Profilstücken zusammengesetzten Gehäuse 22 umschlossen ist. Das Gehäuse 22 weist Aussparungen 24 zur Aufnahme von am Wellenumfang verteilten Führungsfinnen 26, 26' auf. Dabei ist ein erster Satz von Führungsfinnen 26 mit dem Gehäuse 22 fest verbunden, wobei ein zweiter Satz von Führungsfinnen 26' in den diesen zugeordneten Aussparungen 24 in der durch den Pfeil X angedeuteten Längsrichtung der Antriebswelle verschiebbar ist.

Die Antriebswelleneinheit 14 ist sowohl gegenüber thermischen als auch gegenüber mechanischen Belastungen besonders stabil. Durch die Anordnung der Antriebswelle 20 innerhalb des Gehäuses 22 ist die Gesamtmasse der Antriebswelleneinheit 14 und damit ihre thermische Trägheit besonders gering. Bei einer Aufheizung oder Abkühlung der Antriebswelleneinheit 14 aufgrund einer Veränderung in ihrer Umgebung, beispielsweise bei einem Lastwechsel der Gasturbine, wird zunächst das Gehäuse 22 erwärmt bzw. abgekühlt. Erst verspätet wird dann die Antriebswelle 20 ebenfalls erwärmt bzw. abgekühlt. Aufgrund einer derartigen Verzögerung erfolgt eine thermische Ausdehnung oder Kontraktion beim Gehäuse 22 früher als bei der Antriebswelle 20. Zur Vermeidung daraus möglicherweise resultierender thermischer Spannungen zwischen dem Gehäuse 22 und der Antriebswelle 20 ist der zweite Satz von Führungsfinnen 26' in den diesen zugeordneten Aussparungen 24 in Längsrichtung X der Antriebswelle 20 verschiebbar gelagert.

Durch die Ausgestaltung des Gehäuses 22 weist die Antriebswelleneinheit 14 aufgrund ihrer hohen Torsionsfestigkeit eine besonders hohe mechanische Belastbarkeit auf. Die Antriebswelleneinheit 14 ist somit auch bei einer einseitigen Anordnung eines Stellmotors besonders sicher und zuverlässig und weist eine lange Lebensdauer auf.

## Patentansprüche

1. Antriebswelleneinheit (14) für eine Rauchgasklappe (12) im Rauchgaskanal (4) einer Gasturbine, mit einem eine Antriebswelle (20) umschließenden Gehäuse (22), das Aussparungen (24) zur Aufnahme von am Wellenumfang verteilten Führungsfinnen (26, 26') aufweist, wobei ein erster Satz von Führungsfinnen (26) mit dem Gehäuse (22) fest verbunden ist, und wobei ein zweiter Satz von Führungsfinnen (26') in den diesen zugeordneten Aussparungen (24) in Längsrichtung X der Antriebswelle (20) verschiebbar ist.

2. Antriebswelleneinheit nach Anspruch 1, deren Gehäuse (22) aus zwei U-Profilstücken zusammengesetzt ist.

## Claims

1. Drive shaft unit (14) for a flue gas flap (12) in the flue gas channel (4) of a gas turbine, having a housing (22), which encloses a drive shaft (20) and has recesses (24) for receiving guide fins (26, 26'), which are distributed over the shaft periphery, wherein a first set of guide fins (26) are firmly connected to the housing (22), and wherein a second set of guide fins (26') are displaceable in their associated recesses (24) in longitudinal direction X of the drive shaft (20).

2. Drive shaft unit according to claim 1, the housing (22) of which is composed of two channel section pieces.

## Revendications

1. Unité (14) à arbre d'entraînement pour un volet (12) de gaz d'échappement dans le canal (4) de gaz d'échappement d'une turbine à gaz, comprenant une enveloppe (22) entourant un arbre (20) d'entraînement qui a des évidements (24) de réception d'ailettes (26, 26') de guidage réparties sur le pourtour de l'arbre, un premier jeu d'ailettes (26) de guidage étant relié rigidement à l'enveloppe (22) et un deuxième jeu d'ailettes (26') de guidage pouvant coulisser dans la direction X longitudinale de l'arbre d'entraînement dans les évidements (24) qui leur sont associés.

2. Unité à arbre d'entraînement suivant la revendication 1, dont l'enveloppe (22) est composée de deux pièces profilées en U.
